# NEUE EUROPÄISCHE PATENTSCHRIFT

(11) **EP 3 247 596 B2**
(45) Veröffentlichungstag und Bekanntmachung des Hinweises auf die Entscheidung über den Einspruch: **20.11.2024**
(45) Hinweis auf die Patenterteilung: 12.12.2018
(21) Anmeldenummer: 15820143.4
(22) Anmeldetag: 22.12.2015
(51) Int. Cl.: B60T 7/04, B60T 13/68

(54) **ELEKTRONISCHES BREMSSYSTEM FÜR EINE DRUCKLUFTBREMSANLAGE EINES NUTZFAHRZEUGS**
ELECTRONIC BRAKE SYSTEM FOR A VEHICLE
SYSTÈME DE FREINAGE ÉLECTRONIQUE POUR VEHICULE

(30) Priorität: 22.01.2015 DE 102015201031
(43) Veröffentlichungstag der Anmeldung: 29.11.2017
(73) Patentinhaber: Volkswagen Aktiengesellschaft, 38440 Wolfsburg (DE)
(72) Erfinder: WITTE, Bastian, 38179 Groß Schwülper (DE)
(74) Vertreter: Hofstetter, Schurack & Partner
(86) Internationale Anmeldenummer: PCT/EP2015/080937
(87) Internationale Veröffentlichungsnummer: WO 2016/116241

(56) Entgegenhaltungen:
- EP-A1- 1 767 421
- EP-A2- 1 000 830
- WO-A1-2016/026616
- CN-A- 101 879 892
- DE-C1- 19 947 757
- GB-A- 2 100 816

## Beschreibung

Die Erfindung betrifft ein elektronisches Bremssystem für eine Bremsanlage, insbesondere eine Druckluftbremsanlage oder eine hydraulische Fremdkraftbremsanlage eines Nutzfahrzeugs gemäß dem Oberbegriff von Patentanspruch 1.

Derartige elektronische Bremssysteme für Bremsanlagen, insbesondere Druckluftbremsanlagen oder hydraulische Fremdkraftbremsanlagen, von Nutzfahrzeugen sind aus dem allgemeinen Stand der Technik und insbesondere aus dem Serienfahrzeugbau bereits hinlänglich bekannt. Üblicherweise umfasst die Bremsanlage eine Mehrzahl von Betriebsbremsen, mittels welchen jeweilige Räder des Nutzfahrzeugs und somit das Nutzfahrzeug insgesamt abbremsbar sind. Die jeweilige Betriebsbremse ist bei einer Druckluftbremsanlage eine pneumatische Betriebsbremse beziehungsweise eine pneumatisch betätigbare Betriebsbremse und kann somit mittels eines Fluids in Form von Druckluft betätigt werden. Bei einer hydraulischen Fremdkraftbremsanlage kann die jeweilige Betriebsbremse mittels eines Fluids in Form einer Flüssigkeit, das heißt einer Hydraulikflüssigkeit betätigt werden.

Die Bremsanlage kann dabei mehrere Bremskreise umfassen und demzufolge als Mehrkreisbremsanlage ausgebildet sein. Mittels des elektronischen Bremssystems ist es möglich, einen vom Fahrer des Nutzfahrzeugs vorgebbaren Bremswunsch elektronisch auf die Betriebsbremsen und somit auf die zugehörigen Räder des beispielsweise als Lastkraftwagen ausgebildeten Nutzfahrzeugs zu verteilen.

Das elektronische Bremssystem weist einen Bremswertgeber auf, welcher auch als Pedalwertgeber (PWG) bezeichnet wird. Der Bremswertgeber weist wenigstens einen Sensor zum Erfassen von Stellungen eines durch den Fahrer des Nutzfahrzeugs betätigbaren Bremspedals auf. Mit anderen Worten kann der Fahrer seinen Bremswunsch durch Betätigen des Bremspedals vorgeben. Hierzu kann der Fahrer das Bremspedal mit seinem Fuß in unterschiedliche Stellungen bewegen, wobei diese Stellungen mittels des Sensors des Bremswertgebers erfasst werden. Üblicherweise lädt bei der Druckluftbremsanlage wenigstens eine Pumpe für jeden Bremskreis jeweils wenigstens einen pneumatischen Druckspeicher auf einen konstanten Luftdruck auf, wobei der Luftdruck beispielsweise 12 bar beträgt. Von den jeweiligen Druckspeichern führen Versorgungsleitungen zu jeweiligen Ventilen, über welche die Räder beziehungsweise die zugehörigen Betriebsbremsen mit Druck beaufschlagt, das heißt mit Druckluft aus den Druckspeichern versorgt werden können.

Betätigt der Fahrer das Bremspedal, so bewegt der Fahrer das Bremspedal beispielsweise um einen gewünschten Weg aus einer Ruhestellung in eine Betätigungsstellung. Der Weg wird mittels des Sensors gemessen, wobei der Sensor beispielsweise ein den gemessenen Weg charakterisierendes Signal bereitstellt. Üblicherweise umfasst das elektronische Bremssystem wenigstens ein elektronisches Steuergerät, welches das genannte Signal empfängt. Somit wird der mittels des Sensors gemessene Weg von dem elektronischen Steuergerät ausgewertet. In der Folge verteilt das elektronische Steuergerät den Bremswunsch des Fahrers elektronisch auf alle Räder. Hierzu sendet das elektronische Steuergerät eine elektronische Druckanforderung an das jeweilige Ventil, welches somit als elektrisches Ventil beziehungsweise elektrisch betätigbares Ventil ausgebildet ist. Das jeweilige Ventil ist mit dem elektronischen Steuergerät verbunden und kann mittels des elektronischen Steuergeräts angesteuert, das heißt betätigt werden. Das jeweilige Ventil regelt dann mittels eines eigenen Drucksensors einen jeweiligen Radbremsdruck ein. Hierzu entnimmt das jeweilige Ventil bei der Druckluftbremsanlage zum Druckaufbau Druckluft aus der jeweiligen Versorgungsleitung. Die vorigen und folgenden Ausführungen können auch auf eine hydraulische Fremdkraftanlage übertragen werden, bei welcher anstelle von Druckluft eine Flüssigkeit zum Einsatz kommt.

Über die jeweiligen Bremskreise können beispielsweise eine oder mehrere Vorderachsen, eine oder mehrere Hinterachsen sowie ein Anhänger des Nutzfahrzeugs mit dem Medium, das heißt beispielsweise mit Druckluft, zum Betätigen von jeweiligen Betriebsbremsen versorgt werden.

Bei der zuvor geschilderten, elektronischen Verteilung des Bremswunschs auf die Räder beziehungsweise die zugehörigen Betriebsbremsen handelt es sich um eine sogenannte elektrische Ebene des elektronischen Bremssystems. Das elektronische Bremssystem weist üblicherweise auch eine Rückfallebene, insbesondere eine pneumatische Rückfallebene, auf. Zur Realisierung der Rückfallebene weist der Bremswertgeber wenigstens ein von den zuvor genannten Ventilen unterschiedliches Ventil auf, welches über das Bremspedal mechanisch betätigbar ist. Das über das Bremspedal mechanisch betätigbare Ventil ist infolge der mechanischen Betätigung aus einer Druckabbaustellung in eine Druckhalte- und eine Druckaufbaustellung bewegbar. In der Druckaufbaustellung lässt das Ventil wenigstens eine Fluidströmung, beispielsweise eine Druckluftströmung zum Betätigen wenigstens einer der Betriebsbremsen der Bremsanlage zu . Mit anderen Worten, beim Betätigen des Bremspedals wird in dem vom Bremspedal betätigten Bremswertgeber das mechanisch betätigbare Ventil, welches auch als mechanisches Ventil bezeichnet wird, in eine andere Schaltstellung verschoben. In der Druckaufbaustellung lässt das Ventil Fluid, beispielsweise Druckluft, aus einem Druckspeicher in wenigstens eine Steuerleitung fließen. Dabei kann vorgesehen sein, dass das mechanische Ventil Druckluftströmungen in die Steuerleitungen der mehreren Bremskreise zulässt. Diese Steuerleitungen führen zu jeweiligen Radventilen der Betriebsbremsen, sodass die Betriebsbremsen beziehungsweise zugehörigen Räder als Rückfallebene direkt gebremst werden können. Dies ist beispielsweise dann vorteilhaft, wenn die elektrische Ebene, das heißt beispielsweise das elektronische Steuergerät, ausfällt, sodass die zuvor geschilderte elektronische Verteilung des Bremswunschs auf die Räder nicht durchgeführt werden kann.

Ein solches elektronisches Bremssystem ist beispielsweise der EP 1 000 830 A2 als bekannt zu entnehmen.

Darüber hinaus kann das elektronische Bremssystem wenigstens eine Parkbremse umfassen. Üblicherweise ist nicht jedem Rad eine Parkbremse zugeordnet, sondern lediglich eine Teilmenge der Räder ist mit einer Parkbremse ausgestattet. Eine solche Parkbremse umfasst beispielsweise wenigstens eine Feder, mittels welcher ein Bremsbelag permanent gegen ein korrespondierendes Bremselement beispielsweise in Form einer Bremsscheibe oder einer Bremstrommel gedrückt wird, wodurch das Nutzfahrzeug festgehalten werden kann. Mit anderen Worten ist es mittels der Parkbremse möglich, das Nutzfahrzeug, insbesondere, wenn es an einer Steigung geparkt ist, gegen ein unerwünschtes Wegrollen zu sichern. Zum Lösen der Parkbremse wird Druckluft genutzt, welche beispielsweise gegen die Feder drückt, wodurch die mittels der Feder bewirkte Federvorspannung des Bremsbelags überwunden wird. Dies bedeutet, dass die Parkbremse mittels Druckluft gelöst wird. Die Druckluft zum Betätigen der Parkbremse entstammt einem weiteren Druckspeicher.

Ist das elektronische Bremssystem beziehungsweise die Bremsanlage insgesamt vollständig intakt, so wird jede Bremsung auf der eine erste Betriebsebene darstellenden elektrischen Ebene durchgeführt. Nun sind jedoch folgende Fehler denkbar:
- Im Falle eines Fehlers im elektronischen Bremssystem schaltet sich dieses ab, und die Bremsanlage fällt automatisch in die, insbesondere pneumatische, Rückfallebene.
- Im Falle einer Leckage eines Bremskreises steht beispielsweise wenigstens ein anderer der Bremskreise zur Verfügung, um zumindest noch eine Hilfsbremswirkung sicherzustellen, welche beispielsweise nach ECE R13 gefordert ist. Üblicherweise sind drei oder vier Druckspeicher vorgesehen.
- Sollte die genannte Pumpe ausfallen, steht in den drei oder vier Druckspeichern gemäß den Anforderungen von ECE R13 noch Druckluft zur Verfügung, um mindestens acht Vollbremsungen durchzuführen.

Aufgabe der vorliegenden Erfindung ist es, ein elektronisches Bremssystem der eingangs genannten Art auf besonders einfache Weise derart weiterzuentwickeln und insbesondere für die Realisierung eines automatisch fahrenden Nutzfahrzeugs auf besonders einfache Weise derart zu ertüchtigen, dass auch im Falle eines Fehlers, insbesondere eines beliebigen Einfachfehlers, immer noch eine besonders hohe Bremswirkung erzielt werden kann. Diese Bremswirkung soll deutlich höher als für die Hilfsbremswirkung gefordert ausfallen, bevorzugt sollen die Verzögerungsanforderungen an die Betriebsbremswirkung, also die Verzögerungsanforderungen an eine intakte Bremsanlage trotz Vorliegen eines beliebigen Einfachfehlers erfüllt werden.

Diese Aufgabe wird durch ein elektronisches Bremssystem mit den Merkmalen des Patentanspruchs 1 gelöst. Vorteilhafte Ausgestaltungen mit zweckmäßigen Weiterbildungen der Erfindung sind in den übrigen Ansprüchen angegeben.

Die Erfindung betrifft ein elektronisches Bremssystem für eine Bremsanlage, insbesondere eine Druckluftbremsanlage oder eine hydraulische Fremdkraftbremsanlage, eines Nutzfahrzeugs. Das elektronische Bremssystem umfasst einen Bremswertgeber, welcher wenigstens einen Sensor und wenigstens ein Ventil aufweist. Mittels des Sensors sind Stellungen eines durch den Fahrer des Nutzfahrzeugs betätigbaren Bremspedals erfassbar. Das Ventil ist ein mechanisch betätigbares Ventil beziehungsweise ein mechanisches Ventil, das über das Bremspedal mechanisch betätigbar ist. Für jeden der Bremskreise des Nutzfahrzeugs ist ein eigenes Ventil verbaut, welche mechanisch gleich betätigt werden. Das mechanisch betätigbare Ventil ist infolge der mechanischen Betätigung in verschiedene Positionen bewegbar. Es gibt nun drei Betriebsstellungen beziehungsweise Positionen des jeweiligen, mechanisch betätigbaren Ventils:
1. In einer Druckaufbaustellung lässt das Ventil eine Fluidströmung, insbesondere eine Druckluftströmung, von einem Druckspeicher zu Betriebsbremsen beziehungsweise Radbremsen der Bremsanlage zu. In dieser Druckaufbaustellung vergrößert sich die Verzögerung des Nutzfahrzeugs.
2. In einer Druckhaltestellung ist die Druckluftströmung vom Druckspeicher zu den Radbremsen beziehungsweise von den Radbremsen zur Umgebungsluft mittels des mechanisch betätigbaren Ventils unterbunden. In dieser Druckhaltestellung bremst das Nutzfahrzeug mit konstanter Verzögerung ab.
3. In einer Druckabbaustellung strömt die Luft aus den Radbremsen rückwärts durch das mechanisch betätigbare Ventil hindurch in die Umgebungsluft ab. Die Verzögerung des Nutzfahrzeugs verringert sich.

Für die Druckaufbaustellung und die Druckabbaustellung wird durch die Freigabe eines mehr oder weniger großen Durchströmungsquerschnitts im mechanisch betätigbaren Ventil eine stufenlos einstellbare Verzögerung des Nutzfahrzeugs bewirkt.

Bei nicht betätigtem Bremspedal befindet sich das mechanisch betätigbare Ventil grundsätzlich in der Druckabbaustellung. Ein noch vorhandener Restdruck in einem der Bremskreise kann somit an die Umgebungsluft abströmen.

Um nun das elektronische Bremssystem auf besonders einfache Weise derart weiterzuentwickeln und insbesondere auf besonders einfache Weise derart für die Realisierung eines automatisch fahrenden Nutzfahrzeugs zu ertüchtigen, dass auch im Falle eines Fehlers, insbesondere eines beliebigen Einfachfehlers, immer noch eine besonders hohe Bremswirkung mittels des elektronischen Bremssystems erzielt werden kann, ist es erfindungsgemäß vorgesehen, dass dem Ventil wenigstens ein vom Bremspedal unterschiedliches Stellglied zugeordnet ist, mittels welchem das Ventil bewegbar, das heißt insbesondere aus der Druckabbaustellung in die Druckhalte- und Druckaufbaustellung bewegbar ist.

Sollte beispielsweise aufgrund eines Fehlers eine durch das elektronische Bremssystem bewirkbare elektronische Verteilung eines vom Fahrer vorgegebenen Bremswunsches auf Betriebsbremsen der Bremsanlage nicht durchführbar sein, so ist es dann immer noch möglich, das Ventil mittels des Stellglieds in die Druckaufbau- oder Druckhaltestellung zu bewegen und dadurch die wenigstens eine Betriebsbremse der Bremsanlage zu betätigen, um auch bei Ausfall der zuvor geschilderten, elektronischen Ebene eine hinreichende Bremsung des Nutzfahrzeugs zu realisieren. Dadurch ist es möglich, zumindest noch die sogenannte Betriebsbremswirkung nach ECE R13 zu erreichen, um dadurch für das Nutzfahrzeug eine Mindestabbremsung beziehungsweise eine Mindestverzögerung von beispielsweise 5 Metern pro Quadratsekunde zu erreichen.

Gleichzeitig kann der Aufwand zur Realisierung dieser hohen Bremswirkung besonders gering gehalten werden, da das elektronische Bremssystem beziehungsweise der Bremswertgeber nicht vollständig umkonstruiert werden muss, sondern erfindungsgemäß ist es vorgesehen, das ohnehin vorhandene, mechanisch betätigbare Ventil mit dem Stellglied auszustatten, sodass das Ventil nicht nur über das Bremspedal durch den Fahrer mechanisch, sondern auch mittels des Stellglieds betätigt werden kann.
Dadurch ist es beispielsweise im Rahmen eines automatischen Fahrens des Nutzfahrzeugs möglich, das beispielsweise im Bremswertgeber angeordnete, mechanisch betätigbare Ventil mittels des Stellglieds so zu betätigen, als wenn der Fahrer das Ventil über das Bremspedal mechanisch betätigen würde.

Das mechanisch betätigbare Ventil ist somit nicht nur über das Bremspedal, sondern auch "von außen", das heißt beispielsweise mittels eines Steuergeräts, ansteuerbar, das heißt betätigbar beziehungsweise bewegbar. Dadurch kann beispielsweise auch bei der Realisierung eines automatischen Fahrens des Nutzfahrzeugs die zuvor genannte, ohnehin vorhandene, insbesondere pneumatische, Rückfallebene auf einfache Weise realisiert werden, sodass auch im Rahmen des automatischen Fahrens im Fehlerfall eine hinreichende Bremswirkung erzielt werden kann, ohne dass hierzu übermäßige Änderungen des Bremswertgebers erforderlich und vorgesehen sind.

Mit anderen Worten kann mit einem nur geringen Zusatzaufwand eine Redundanz hinsichtlich der Betätigung des mechanisch betätigbaren Ventils geschaffen werden, da das mechanisch betätigbare Ventil nicht nur über das Bremspedal, sondern auch mittels des Stellglieds betätigt, das heißt bewegt werden kann.

Ist die Bremsanlage als Druckluftbremsanlage ausgebildet, so handelt es sich bei dem Medium um Druckluft, sodass die jeweilige Betriebs- beziehungsweise Radbremse pneumatisch betätigbar ist. Die Fluidströmung ist dann eine Druckluftströmung. Ist die Bremsanlage jedoch als hydraulische Fremdkraftbremsanlage ausgebildet, so handelt es sich bei dem Medium um eine Flüssigkeit beziehungsweise Hydraulikflüssigkeit oder Bremsflüssigkeit, sodass die jeweilige Betriebs- beziehungsweise Radbremse hydraulisch betätigbar ist. Die Fluidströmung ist dann eine Flüssigkeits- oder Hydraulikströmung.

Um den Aufwand zur Realisierung dieser Redundanz besonders gering zu halten, ist es gemäß der Erfindung vorgesehen, dass das Stellglied als elektrisch betätigbares Stellglied ausgebildet ist. Dies bedeutet, dass das Stellglied mit Hilfe von elektrischem Strom beziehungsweise elektrischer Energie betätigbar ist, sodass schließlich das Ventil nicht nur mechanisch, sondern auch elektrisch betätigbar ist.

Das Stellglied ist als Elektromagnet ausgebildet. Ein solcher Elektromagnet kann auf besonders einfache und platzsparende Weise in den Bremswertgeber, welcher auch als Pedalwertgeber (PWG) bezeichnet wird, integriert werden. Dadurch können auch übermäßige Änderungen des ohnehin vorhandenen Ventils vermieden werden.

Eine weitere Ausführungsform zeichnet sich dadurch aus, dass das Ventil mittels des Stellglieds unabhängig vom Bremspedal bewegbar ist. Darunter ist zu verstehen, dass das Ventil mittels des Stellglieds bewegbar ist, ohne dabei gleichzeitig das Bremspedal zu bewegen. Mit anderen Worten kann das Bremspedal in seiner aktuellen Stellung verbleiben, während das Ventil mittels des Stellglieds relativ zum Pedal bewegt wird. Dadurch können unerwünschte Beeinträchtigungen des Bremspedals vermieden werden, und es kann eindeutig zwischen einer vom Fahrer initiierten Bremsung mittels Betätigung des Bremspedals und einer extern initiierten Bremsung ohne Betätigung des Bremspedals unterschieden werden. Auf diese Art und Weise kann erfasst werden, ob der Fahrer während einer automatischen Fahrt die Steuerung des Fahrzeugs wieder selbst übernehmen möchte.

Um auch im Fehlerfall eine hinreichende Bremswirkung auf einfache Weise zu erzielen, ist es bei einer weiteren Ausführungsform der Erfindung vorgesehen, dass das elektronische Bremssystem eine erste Batterie zum Speichern von elektrischem Strom sowie ein mit der ersten Batterie verbundenes erstes elektronisches Steuergerät umfasst, welches von der ersten Batterie mit elektrischem Strom versorgbar ist. Ferner ist wenigstens ein elektrisch betätigbares und mittels des ersten elektronischen Steuergeräts in Abhängigkeit von der jeweiligen erfassten Stellung des Bremspedals betätigbares zweites Ventil vorgesehen, mittels welchem eine Fluidströmung, insbesondere eine Druckluftströmung, zum Betätigen wenigstens einer Betriebsbremse der Bremsanlage einstellbar ist. Diese wenigstens eine Betriebsbremse kann die zuvor genannten Betriebsbremse oder eine andere Betriebsbremse des Nutzfahrzeugs sein.

Mittels des ersten elektronischen Steuergeräts kann somit die zuvor genannte elektronische Verteilung des Bremswunsches auf jeweilige Betriebsbremsen und somit Räder des Nutzfahrzeugs durchgeführt werden. Fällt beispielsweise das erste elektronische Steuergerät aus, sodass das zweite Ventil nicht mehr von dem ersten elektronischen Steuergerät angesteuert, das heißt betätigt werden kann, so ist die elektronische Verteilung des Bremswunschs nicht mehr durchführbar. Mit anderen Worten ist dann die Betriebsbremse nicht mehr über das zweite Ventil und das erste elektronische Steuergerät betätigbar. Dann ist es jedoch möglich, insbesondere im Rahmen eines automatischen Fahrens des Nutzfahrzeugs, mittels des Stellglieds das erste Ventil zu betätigen und dabei aus der Druckabbaustellung in die Druckhalte- oder Druckaufbaustellung zu bewegen, um dadurch die Betriebsbremse über das erste Ventil zu betätigen und eine hinreichende Bremsung des Kraftwagens zu bewirken.

Zur Realisierung einer besonders vorteilhaften Redundanz auf einfache Weise ist eine von der ersten Batterie unterschiedliche, zweite Batterie zum Speichern von elektrischem Strom vorgesehen. Ferner umfasst das elektronische Bremssystem ein vom ersten elektronischen Steuergerät unterschiedliches, zweites elektronisches Steuergerät, mittels welchem das Stellglied ansteuerbar ist. Dabei ist das zweite elektronische Steuergerät mit der zweiten Batterie verbunden und von der zweiten Batterie mit elektrischem Strom versorgbar. Hierdurch ist eine Redundanz im Hinblick auf die Energieversorgung der elektronischen Steuergeräte geschaffen. Fällt beispielsweise die erste Batterie aus, sodass das erste elektronische Steuergerät nicht mehr mit elektrischem Strom aus der ersten Batterie versorgt werden kann, so fällt auch das erste elektronische Steuergerät aus. In der Folge kann das zweite Ventil nicht mehr vom ersten elektronischen Steuergerät angesteuert werden, sodass die Betriebsbremse nicht mehr über das zweite Ventil betätigt werden kann.

In diesem Fall kann jedoch das zweite elektronische Steuergerät mit elektrischem Strom aus der zweiten Batterie versorgt werden, sodass das Stellglied weiterhin mittels des zweiten Steuergeräts angesteuert werden kann. Somit ist es möglich, mittels des zweiten, noch zur Verfügung stehenden elektronischen Steuergeräts das Stellglied und über dieses das erste Ventil zu betätigen, sodass die Betriebsbremse über das erste Ventil betätigt werden kann.

Dabei hat es sich ferner als besonders vorteilhaft gezeigt, wenn das Stellglied mit der zweiten Batterie verbunden und von der zweiten Batterie mit elektrischem Strom versorgbar ist. Ist das Stellglied beispielsweise als elektrisches Stellglied beziehungsweise elektrisch betätigbares Stellglied ausgebildet, so kann das Stellglied bei Ausfall der ersten Batterie und somit bei Ausfall des ersten elektronischen Steuergeräts mit elektrischem Strom aus der zweiten Batterie versorgt werden, sodass das Stellglied und somit das erste Ventil bei Ausfall der elektrischen Ebene des elektronischen Bremssystems zur Verfügung stehen, um die Betriebsbremse zu betätigen.

Bei einer weiteren vorteilhaften Ausführungsform der Erfindung ist der Sensor des Bremswertgebers mit der ersten Batterie verbunden und von der ersten Batterie mit elektrischem Strom versorgbar.

Dabei hat es sich als vorteilhaft gezeigt, wenn der Bremswertgeber wenigstens einen zweiten Sensor zum Erfassen der Stellungen des Bremspedals umfasst, wobei der zweite Sensor mit der zweiten Batterie verbunden und von der zweiten Batterie mit elektrischem Strom versorgbar ist. Hierdurch ist zum einen auf besonders einfache Weise eine Redundanz hinsichtlich der Erfassung der Stellungen des Bremspedals geschaffen. Zum anderen ist eine Redundanz hinsichtlich der Energieversorgung der Sensoren auf einfache Weise geschaffen.

Fällt beispielsweise die erste Batterie aus, so fällt auch der erste Sensor aus. Dann steht jedoch noch die zweite Batterie zur Verfügung, um den zweiten Sensor mit elektrischem Strom zu versorgen. Somit können die Stellungen des Bremspedals noch mittels des zweiten Sensors erfasst werden. Dadurch ist es insbesondere im Rahmen des automatischen Fahrens möglich, eindeutig zu unterscheiden, ob und wie stark der Fahrer trotz der Durchführung des automatischen Fahrens bremsen möchte, das heißt das Bremspedal betätigt. Um dies auf einfache Weise zu realisieren, werden die Sensoren aus unterschiedlichen elektrischen Quellen in Form der Batterien gespeist.

Bei einer weiteren Ausführungsform der Erfindung ist der erste Sensor zum Bereitstellen eines die jeweiligen erfassten Stellungen charakterisierenden ersten Signals ausgebildet und mit dem ersten elektronischen Steuergerät gekoppelt. Das erste elektronische Steuergerät ist dabei zum Erfassen des ersten Signals ausgebildet. Mit anderen Worten wird das erste Signal an das erste elektronische Steuergerät übermittelt und von diesem empfangen, sodass das erste Signal mittels des ersten elektronischen Steuergeräts ausgewertet werden kann.

Der zweite Sensor ist dabei zum Bereitstellen eines die jeweiligen erfassten Stellungen charakterisierenden zweiten Signals ausgebildet und mit dem zweiten elektronischen Steuergerät gekoppelt. Dabei ist das zweite elektronische Steuergerät zum Erfassen des zweiten Signals ausgebildet. Mit anderen Worten wird das zweite Signal vom zweiten Sensor an das zweite elektronische Steuergerät übertragen und vom zweiten elektronischen Steuergerät erfasst, sodass das zweite Signal mittels des zweiten elektronischen Steuergeräts ausgewertet werden kann. Hierdurch ist nicht nur eine Redundanz der Sensoren hinsichtlich ihrer Energieversorgung, sondern auch eine Redundanz hinsichtlich der Auswertung der Signale geschaffen, da das erste Signal mittels des ersten elektronischen Steuergeräts und das zweite Signal mittels des zweiten elektronischen Steuergeräts ausgewertet werden kann.

Dabei kann vorgesehen sein, dass die elektronischen Steuergeräte, welche auch als ECU bezeichnet werden (ECU - Electronic Control Unit), über ein Datenbussystem wie beispielsweise einen CAN-Bus miteinander elektrisch gekoppelt sind, sodass die elektronischen Steuergeräte über das Datenbussystem die Signale austauschen können. Dadurch ist es möglich, die Signale gegenseitig zu plausibilisieren, um etwaige Fehler erkennen zu können.

In weiterer Ausgestaltung der Erfindung umfasst das elektronische Bremssystem wenigstens eine, insbesondere pneumatisch betätigbare, Parkbremse sowie wenigstens ein drittes Ventil. An dieser Stelle sei angemerkt, dass das zweite Ventil ein vom ersten Ventil unterschiedliches und zusätzlich dazu vorgesehenes zweites Ventil ist, wobei das dritte Ventil ein vom ersten Ventil und vom zweiten Ventil unterschiedliches und zusätzlich dazu vorgesehenes drittes Ventil ist. Mittels des dritten Ventils ist eine Fluidströmung, insbesondere eine Druckluftströmung, zum Betätigen der Parkbremse einstellbar. Dabei ist dem dritten Ventil wenigstens ein zweites Stellglied, insbesondere ein elektrisch betätigbares zweites Stellglied wie beispielsweise ein zweiter Elektromagnet, zugeordnet, mittels welchem das dritte Ventil betätigbar ist. Dadurch ist es möglich, auch die Parkbremse auf besonders einfache Weise in das automatische Fahren einzubeziehen, da die Parkbremse auf einfache Weise mit dem zweiten Stellglied ausgestattet wird. Dadurch können übermäßige Änderungen der Parkbremse vermieden werden.

Üblicherweise wird die Parkbremse stets vom Fahrer durch Betätigung eines Handhebels geöffnet und geschlossen. Durch Betätigen des Handhebels kann ein Druck, insbesondere pneumatischer Druck, in einer Parkbremsleitung eingestellt werden. Mittels des dritten Ventils und des dem dritten Ventil zugeordneten zweiten Stellglieds zum Betätigen des dritten Ventils ist es möglich, den Druck in der Parkbremsleitung unabhängig von der Betätigung des Handhebels durch den Fahrer geeignet zu beeinflussen und abzustufen, sodass die Parkbremse sowie ein ihr zugeordneter Parkbremskreis, in welchem die Parkbremse angeordnet ist, als Rückfallebene beispielsweise für den Fall einer Leckage in einem Betriebsbremskreis der zugeordneten Achse zu nutzen. Hierzu ist das dritte Ventil, welches auch als Parkbremsventil bezeichnet wird, über das zweite Stellglied ansteuerbar beziehungsweise betätigbar.

Dabei hat es sich als besonders vorteilhaft gezeigt, wenn das dritte Ventil (Parkbremsventil) mittels des ersten elektronischen Steuergeräts betätigbar ist. Mit anderen Worten ist es vorzugsweise vorgesehen, dass die Ansteuerung des zweiten Stellglieds durch das erste elektronische Steuergerät erfolgt, da eine Leckage und ein zeitgleicher Fehler im ersten elektronischen Steuergerät ausgeschlossen werden können. Zugleich kann dadurch die Parkbremse als automatische Parkbremse ausgestaltet werden, was für die Realisierung des automatischen Fahrens und für die Realisierung eines fahrerlosen Rangierens auf einem Betriebshof sehr sinnvoll ist.

Zur Erfindung gehört auch ein Nutzfahrzeug mit einem erfindungsgemäßen elektronischen Bremssystem. Bei dem Nutzfahrzeug handelt es sich beispielsweise um ein schweres Nutzfahrzeug, wobei mittels des elektronischen Bremssystems ein automatisches Fahren des Nutzfahrzeugs auf besonders einfache Weise darstellbar ist. Hierbei ist es möglich, in das automatische Fahren das mechanisch betätigbare Ventil einzubeziehen und hierbei auch im Rahmen des automatischen Fahrens die zuvor beschriebenen Rückfallebene auf besonders einfache Weise realisieren zu können. Dadurch können die Kosten zur Realisierung des automatischen Fahrens besonders gering gehalten werden.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:

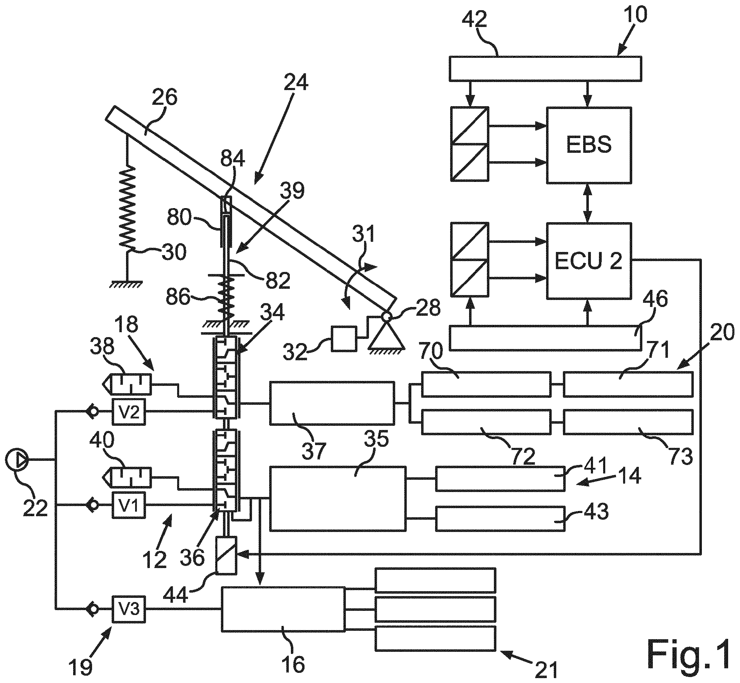

- Fig. 1: eine schematische Darstellung eines elektronischen Bremssystems für eine Druckluftbremsanlage eines Nutzfahrzeugs, mit einem Bremswertgeber, welcher wenigstens einen Sensor zum Erfassen von Stellungen eines durch den Fahrer des Nutzfahrzeugs betätigbaren Bremspedals und wenigstens ein über das Bremspedal mechanisch betätigbares Ventil aufweist, welches infolge der mechanischen Betätigung aus einer Druckabbaustellung in wenigstens eine Druckhalte- und/oder Druckaufbaustellung bewegbar ist, in welcher das Ventil wenigstens eine Druckluftströmung zum Betätigen wenigstens einer Betriebsbremse der Druckluftbremsanlage zulässt, wobei dem Ventil wenigstens ein vom Bremspedal unterschiedliches Stellglied zugeordnet ist, mittels welchem das Ventil bewegbar ist;
- Fig. 2: eine schematische Darstellung des elektronischen Bremssystems gemäß einer ersten Ausführungsform; und
- Fig. 3: eine schematische Darstellung des elektronischen Bremssystems gemäß einer zweiten Ausführungsform.

In den Fig. sind gleiche oder funktionsgleiche Elemente mit gleichen Bezugszeichen versehen.

Fig. 1 zeigt in einer schematischen Darstellung ein im Ganzen mit 10 bezeichnetes elektronisches Bremssystem für eine Druckluftbremsanlage eines Nutzfahrzeugs. Die Druckluftbremsanlage umfasst eine Mehrzahl von pneumatisch betätigbaren Betriebsbremsen, welche jeweils wenigstens einem Rad des Nutzfahrzeugs zugeordnet sind. Das jeweilige Rad ist dabei mittels der jeweils zugeordneten Betriebsbremse abbremsbar, sodass das Nutzfahrzeug insgesamt abgebremst werden kann. Die Betriebsbremsen werden auch als Radbremsen bezeichnet.

Das elektronische Bremssystem 10 ist als Mehrkreisbremssystem ausgebildet und umfasst einen in Fig. 1 mit 12 bezeichneten ersten Bremskreis, über welchen Betriebsbremsen einer Hinterachse 14 des Nutzfahrzeugs mit Druckluft zum Betätigen der Betriebsbremsen, welche auch als Radbremsen bezeichnet werden, versorgbar sind. Im ersten Bremskreis 12 ist eine einem linken Hinterrad des Nutzfahrzeugs zugeordnete Radbremse 41 zum Abbremsen des linken Hinterrads und eine einem rechten Hinterrad des Nutzfahrzeugs zugeordnete Radbremse 43 zum Abbremsen des rechten Hinterrads angeordnet, welche über den ersten Bremskreis 12 mit Druckluft zum Betätigen der jeweiligen Radbremse 41 und 43 versorgbar sind. Ferner ist im ersten Bremskreis 12 eine Ventileinrichtung 35 angeordnet, welche einen Hinterachsmodulator, ein der Radbremse 41 zugeordnetes ABS-Ventil und ein der Radbremse 43 zugeordnetes ABS-Ventil (ABS - Anti-Blockier-System) aufweist.

Mittels der Betriebsbremsen der Hinterachse 14 sind die Hinterräder des Nutzfahrzeugs abbremsbar. Ferner ist über den ersten Bremskreis 12 ein Anhängersteuerventil 16 mit Druckluft ansteuerbar.

Ferner umfasst das elektronische Bremssystem 10 beziehungsweise die Druckluftbremsanlage einen zweiten Bremskreis 18, über welchen Betriebsbremsen einer Vorderachse 20 des Nutzfahrzeugs mit Druckluft versorgbar sind. Mittels der Betriebsbremsen der Vorderachse 20 sind Vorderräder des Nutzfahrzeugs abbremsbar. Im zweiten Bremskreis 18 ist eine Ventileinrichtung 37 angeordnet, welche beispielsweise als Proportional-Relaisventil ausgebildet ist. Ferner sind im zweiten Bremskreis Ventile 70 und 72 in Form von ABS-Ventilen angeordnet, wobei das Ventil 70 einer Radbremse 71 zugeordnet ist, welche einem linken Vorderrad des Nutzfahrzeugs zugeordnet ist und zum Abbremsen des linken Vorderrads dient. Das Ventil 72 ist einer Radbremse 73 zugeordnet, welche einem rechten Vorderrad des Nutzfahrzeugs zugeordnet ist und zum Abbremsen des rechten Vorderrads dient. Die Radbremsen 71 und 73 sind über die Ventile 70 und 72 und die Ventileinrichtung 37 mit Druckluft zum Betätigen der Radbremsen 71 und 73 versorgbar.

Wenn das Nutzfahrzeug eine Einrichtung zum Ziehen eines Anhängers aufweist, dann umfasst das elektronische Bremssystem 10 zusätzlich einen dritten Bremskreis 19 mit einem Druckspeicher V3, mittels Radbremsen 21 des Anhängers mit Druckluft versorgt werden können. Die Steuerung dieser Druckluft aus dem Speicher V3 zu den Radbremsen 21 geschieht über die Druckluft aus dem ersten Bremskreis 12. Diese moduliert im Anhängersteuerventil 16 die Druckluft aus dem Speicher V3 für die Radbremsen 21 des Anhängers, welche auch als Betriebsbremsen bezeichnet werden.

Der erste Bremskreis 12 weist wenigstens einen ersten Druckspeicher V1 zum Speichern von Druckluft auf. Somit können die Betriebsbremsen der Hinterachse 14 und das Anhängersteuerventil 16 mit Druckluft aus dem ersten Druckspeicher V1 versorgt werden. Bei dem Druckspeicher V1 handelt es sich somit um einen ersten Tank zum Speichern von Druckluft. Analog dazu weist der zweite Bremskreis 18 wenigstens einen zweiten Druckspeicher V2 zum Speichern von Druckluft auf, sodass die Betriebsbremsen der Vorderachse 20 mit Druckluft aus dem Druckspeicher V2 versorgt werden können. Wenn das Nutzfahrzeug eine Einrichtung zum Ziehen eines Anhängers aufweist, dann weist der dritte Bremskreis den dritten Speicher V3 zum Speichern von Druckluft auf, sodass die Betriebsbremsen des Anhängers mit Druckluft aus dem Speicher V3 versorgt werden können.

Das elektronische Bremssystem 10 und somit die Druckluftbremsanlage weisen ferner eine den Bremskreisen 12 und 18 und somit den Druckspeichern V1,V2 und V3 gemeinsame Pumpe 22 zum Fördern von Druckluft auf. Mittels der Pumpe 22 können die Druckspeicher V1V2 und V3 mit Druckluft aufgeladen werden. Mit anderen Worten wird mittels der Pumpe 22 Druckluft gefördert und dadurch in die Druckspeicher V1,V2 und V3 eingespeist, in denen die Druckluft unter hohem Druck gespeichert werden kann. Beispielsweise wird die Druckluft in den Druckspeichern V1,V2 und V3 mit 12 bar gespeichert. Vorzugsweise ist die Pumpe 22 als Verdichter ausgebildet, welcher auch als Kompressor oder Luftpresser bezeichnet wird. Mittels des Verdichters beziehungsweise Kompressors kann die Druckluft verdichtet und unter hohem Druck in den Druckspeichern V1,V2 und V3 gespeichert werden.

Das elektronische Bremssystem 10 umfasst darüber hinaus einen im Ganzen mit 24 bezeichneten Bremswertgeber, welcher auch als Pedalwertgeber (PWG) bezeichnet wird. Ferner umfasst das elektronische Bremssystem 10 ein Betätigungselement in Form eines Bremspedals 26, welches vom Fahrer betätigbar und dadurch bewegbar ist. Der Fahrer kann das Bremspedal 26 mit seinem Fuß betätigen und dadurch einen Bremswunsch vorgeben. Vorliegend ist das Bremspedal 26 um eine Schwenkachse 28 verschwenkbar, wie in Fig. 1 durch einen Doppelpfeil 31 veranschaulicht ist. Das Bremspedal 26 ist dabei zwischen zwei Endstellungen bewegbar und vom Fahrer in die Endstellungen und eine Vielzahl von unterschiedlichen Zwischenstellungen zwischen den Endstellungen bewegbar. Die Zwischenstellungen und eine der Endstellungen korrespondieren mit einem jeweiligen Bremswunsch des Fahrers. Je weiter beziehungsweise stärker der Fahrer das Bremspedal 26 aus dessen in Fig. 1 gezeigten ersten Endstellung in Richtung der zweiten Endstellung bewegt, desto höher ist eine vom Fahrer gewünschte Bremswirkung beziehungsweise Verzögerung.

Um das Bremspedal 26 aus seiner zweiten Endstellung in seine erste Endstellung zurückzubewegen, ist ein Federelement 30 vorgesehen, welches durch Bewegen des Bremspedals 26 aus der ersten Endstellung in Richtung der zweiten Endstellung gespannt wird. Beendet der Fahrer die Betätigung des Bremspedals 26, so kann sich das Federelement 30 entspannen, wodurch das Bremspedal 26 in die erste Endstellung zurückbewegt wird. In dieser ersten Endstellung beträgt der Bremswunsch 0. Mit anderen Worten kommt es in der ersten Endstellung des Bremspedals 26 nicht zu einer durch das elektronische Bremssystem 10 bewirkten Verzögerung des Nutzfahrzeugs.

Der Bremswertgeber 24 umfasst wenigstens einen in Fig. 1 besonders schematisch dargestellten Sensor 32, mittels welchem die jeweiligen Stellungen des Bremspedals 26 erfassbar sind. Da das Bremspedal 26 vorliegend um die Schwenkachse 28 verschwenkbar ist, ist der Sensor 32 beispielsweise als Winkelsensor beziehungsweise Winkelgeber ausgebildet, sodass mittels des Sensors 32 jeweilige Winkelstellungen des Bremspedals 26 bezogen auf die Schwenkachse 28 erfasst werden können. Der Sensor 32 ist mit anderen Worten dazu ausgebildet, einen jeweiligen Weg, um welchen das Bremspedal 26 durch den Fahrer bewegt wird, zu erfassen.

Der Sensor 32 ist als elektrischer Sensor ausgebildet und stellt ein die erfassten Stellungen des Bremspedals 26 charakterisierendes Signal bereit, welches an ein erstes elektronisches Steuergerät EBS gesendet und vom ersten elektronischen Steuergerät EBS empfangen wird. Dadurch kann das Signal mittels des ersten elektronischen Steuergeräts EBS ausgewertet werden. Dieser Sensor kann auch doppelt vorhanden sein, um kompatibel zu einem EBS für ein nicht automatisch fahrendes Nutzfahrzeug zu bleiben. Aus Fig. 1 ist erkennbar, dass der Bremswertgeber 24 darüber hinaus zwei über das Bremspedal 26 mechanisch betätigbare Ventile 34 und 36 aufweist, wobei das Ventil 34 dem Bremskreis 12 und das Ventil 36 dem Bremskreis 18 zugeordnet ist.

Aus Fig. 1 ist erkennbar, dass die Ventile 34 und 36 über eine mechanische Koppeleinrichtung 39 mechanisch mit dem Bremspedal 26 gekoppelt sind, sodass die Ventile 34 und 36 vom Fahrer über das Bremspedal 26 mechanisch betätigbar, das heißt bewegbar sind. Bewegt der Fahrer das Bremspedal 26 aus seiner ersten Endstellung in Richtung einer zweiten Endstellung, so werden die Ventile 34 und 36 ebenfalls betätigt. Infolge dieser Betätigung werden die Ventile 34 und 36 aus einer jeweiligen, in Fig. 1 gezeigten Druckabbaustellung in eine Druckhalte- oder Druckaufbaustellung bewegt, in welcher die Ventile 34 und 36 wenigstens eine jeweilige Druckluftströmung zum Betätigen wenigstens einer Betriebsbremse der Hinterachse 14 beziehungsweise Vorderachse 20 zulassen.

Durch die Bewegung der Ventile 34 und 36 werden folgende Betriebszustände möglich:
1. In einer in Fig. 1 dargestellten Druckabbaustellung kann Druckluft aus den Radbremsen der Hinterachse 14 und des Anhängers über das Ventil 34 und durch einen Geräuschdämpfer 38 an die Umgebung abströmen. Ebenso strömt Druckluft aus den Radbremsen der Vorderachse 20 über das Ventil 36 und einen Geräuschdämpfer 40 an die Umgebungsluft ab.
2. In einer jeweiligen Druckhaltestellung der Ventile 34 und 36 sind die Radbremsen von den Druckspeichern V1 und V2 sowie den Geräuschdämpfern 38 und 40 getrennt. In dieser Druckhaltestellung wird der Druck in den Radbremsen gehalten, daher wird diese Ventilstellung als Druckhaltestellung bezeichnet.
3. In einer dritten Schaltposition, einer Druckaufbaustellung der Ventile 34 und 36 sind die Druckspeicher V1 und V2 über die Ventile 34 und 36 mit den Radbremsen verbunden, sodass Druckluft aus den Speichern V1 und V2 durch die Ventile 34 und 36 an die Radbremsen strömen kann.

Zwischen den Ventilen 34 und 36 und den Radbremsen der Hinterachse 14, der Vorderachse 20 und des Anhängers und sind die Ventile 70 und 72 vorhanden, mittels welchen das elektronischen Bremssystems 10, insbesondere mittels des ersten elektronischen Steuergeräts EBS, den vom Fahrer vorgegebenen Bremswunsch elektronisch auf die jeweiligen Betriebsbremsen und somit auf die Räder des Nutzfahrzeugs verteilt. Hierzu überträgt beispielsweise das erste elektronische Steuergerät EBS eine elektronische Druckanforderung an die Ventile 70 und 72, welche mittels eines jeweiligen eigenen Drucksensors einen jeweiligen Bremsdruck an der jeweiligen Betriebsbremse einregelt.

Bei vollständig intakter Druckluftbremsanlage wird jede Bremsung auf der elektrischen Ebene des elektronischen Bremssystems 10 durchgeführt. Fällt jedoch beispielsweise das erste elektronische Steuergerät EBS aus, so können die Ventile 70 und 72 nicht mehr vom ersten elektronischen Steuergerät EBS angesteuert, das heißt nicht mehr durch das erste elektronische Steuergerät EBS betätigt werden. Dann fällt das elektronische Bremssystem 10 automatisch in die pneumatische Rückfallebene, sodass die Betriebsbremsen der Hinterachse 14 und der Vorderachse 20 über die mechanisch betätigbaren Ventile 34 und 36 mit Druckluft versorgt werden. Dadurch kann auch im Fehlerfall eine hinreichende Bremswirkung gewährleistet werden.

Aus Fig. 1 ist ferner erkennbar, dass das elektronische Bremssystem 10 eine erste Batterie 42 zum Speichern von elektrischem Strom aufweist. Bei der Batterie 42 handelt es sich vorzugsweise um eine herkömmliche Batterie des Nutzfahrzeugs, welche beispielsweise eine Spannung von 24 Volt aufweist. Vorliegend ist das erste elektronische Steuergerät EBS mit der Batterie 42 verbunden und somit von der Batterie 42 mit elektrischem Strom versorgbar. Auch die Ventile 70 und 72 sind mit der Batterie 42 verbunden und dadurch von der Batterie 42 mit elektrischem Strom versorgbar. Die Ventile 70 und 72 sind beispielsweise als Magnetventile ausgebildet und weisen hierzu jeweils eine elektrisches Stellelement in Form eines Elektromagneten auf, mittels welchem jeweilige Ventilkörper der Ventile 70 und 72 mit Hilfe von elektrischem Strom aus der Batterie 42 bewegbar sind.

Um nun mittels des elektronischen Bremssystems 10 auch im Fehlerfall auf besonders einfache Weise eine besonders hohe Bremswirkung gewährleisten zu können sowie das elektronische Bremssystem 10 auf besonders einfache, kosten- und gewichtsgünstige Weise für die Realisierung eines automatischen Fahrens des Nutzfahrzeugs zu ertüchtigen, ist den Ventilen 34 und 36 ein gemeinsames und vom Bremspedal 26 unterschiedliches, zusätzlich zum Bremspedal 26 vorgesehenes Stellglied 44 zugeordnet, welches als elektrisch betätigbares Stellglied in Form eines Elektromagneten ausgebildet ist. Mittels des Elektromagneten sind die Ventile 34 und 36 unabhängig vom Bremspedal 26, das heißt, ohne das Bremspedal 26 zu bewegen beziehungsweise die jeweilige Stellung des Bremspedals 26 zu beeinflussen, aus der jeweiligen Druckabbaustellung in die jeweilige Druckhalte- oder Druckaufbaustellung bewegbar.

Mittels des Stellglieds 44 ist es somit möglich, die Ventile 34 und 36 im Rahmen eines automatischen Fahrens des Nutzfahrzeugs zu bewegen, ohne dass der Fahrer das Bremspedal 26 betätigt. Dadurch lässt sich auf einfache Weise ohne Zutun des Fahrers und somit auch im Rahmen des automatischen Fahrens die pneumatische Rückfallebene realisieren, sodass beispielsweise auch dann, wenn die Ventile 70 oder 72 ausfallen, eine hinreichende Bremswirkung erzielt werden kann. In diesem Fall können nämlich die jeweiligen Betriebsbremsen über die Ventile 34 und 36 mit Druckluft versorgt werden, da die Ventile 34 und 36 ohne Zutun des Fahrers mittels des Stellglieds 44 bewegt werden können.

Die Ventile 34 und 36 sind beispielsweise in einem Gehäuse des Bremswertgebers 24 angeordnet. Dabei kann das Stellglied 44 ebenfalls auf besonders einfache Weise in den Bremswertgeber 24, insbesondere dessen Gehäuse, integriert werden, ohne dass hierzu übermäßige Änderungen des Bremswertgebers 24 erforderlich sind. Dadurch kann das elektronische Bremssystem 10 auf besonders einfache und kostengünstige Weise sowie platzsparend zur Realisierung eines sicheren automatischen Fahrens ertüchtigt werden.

Durch die mittels des Stellglieds 44 realisierbare Betätigbarkeit der Ventile 34 und 36 kann auch beim automatischen Fahren eine Redundanz hinsichtlich der Betätigung der jeweiligen Betriebsbremsen realisiert werden, da im Normalbetrieb, das heißt wenn das elektronische Bremssystem 10 intakt ist, die Ventile 70 und 72 mittels des ersten elektronischen Steuergeräts EBS im Rahmen des automatischen Verfahrens angesteuert werden können. Dadurch können die Betriebsbremsen im Rahmen des automatischen Fahrens über die Ventile 70 und 72 mittels des ersten elektronischen Steuergeräts EBS betätigt werden. Fällt nun jedoch mindestens eins der Ventile 70 oder 72 aus, das heißt kann mindestens eins der Ventile 70 oder 72 im Rahmen des automatischen Fahrens nicht angesteuert und dadurch betätigt werden, so stehen immer noch die Ventile 34 und 36 zur Verfügung, welche mittels des Stellglieds 44 bewegt werden können.

Um in diese Redundanz auch eine Ansteuerung des Stellglieds 44 mit einzubeziehen, umfasst das elektronische Bremssystem 10 ein von dem ersten elektronischen Steuergerät EBS unterschiedliches, zusätzlich dazu vorgesehenes zweites elektronisches Steuergerät ECU2. Das zweite elektronische Steuergerät ECU2 ist mit dem Stellglied 44 gekoppelt, insbesondere elektrisch verbunden, sodass das Stellglied 44 mittels des zweiten elektronischen Steuergeräts ECU2 ansteuerbar, das heißt betätigbar ist. Fällt somit beispielsweise das erste elektronische Steuergerät EBS aus, sodass auch die Ventile 70 und 72 ausfallen, da die Ventile 70 und 72 nicht mehr mittels des ersten elektronischen Steuergeräts EBS angesteuert werden können, so steht immer noch das zweite elektronische Steuergerät ECU2 zur Verfügung, um das Stellglied 44 anzusteuern und über dieses die Ventile 34 und 36 zu betätigen.

Um darüber hinaus auch die jeweilige Energieversorgung in die Redundanz mit einzubeziehen, umfasst das elektronische Bremssystem 10 eine von der ersten Batterie 42 unterschiedliche, zusätzlich dazu vorgesehene zweite Batterie 46 zum Speichern von elektrischem Strom. Das zweite elektronische Steuergerät ECU2 ist mit der zweiten Batterie 46 verbunden und von der zweiten Batterie 46 mit elektrischem Strom versorgbar. Auch das Stellglied 44 ist mit der zweiten Batterie 46 verbunden und von der zweiten Batterie 46 mit elektrischem Strom versorgbar. Fällt nun beispielsweise die erste Batterie 42 aus, sodass das erste elektronische Steuergerät EBS und die Ventile 70 und 72 nicht mehr mit elektrischem Strom versorgt und somit betrieben werden können, so steht noch die Batterie 46 zur Verfügung, um das zweite elektronische Steuergerät ECU2 und das Stellglied 44 mit elektrischem Strom zu versorgen, sodass die Ventile 34 und 36 bewegt werden können. Beispielsweise weist die zweite Batterie 46 eine Spannung von 12 Volt auf.

Um die jeweilige Stellung des Bremspedals 26 besonders präzise erfassen zu können, weist der Bremswertgeber 24 beispielsweise wenigstens einen Schalter auf. Der Schalter ist beispielsweise derart ausgebildet, dass er durch Betätigen des Bremspedals 26 geschlossen wird, wenn das Bremspedal 26 maximal bis zum Umschaltwinkel verschwenkt wird. Der Umschaltwinkel beträgt beispielsweise 3 bis 7 Grad. Wird beispielsweise anhand des Signals ermittelt, dass das Bremspedal 26 bereits um mehr als den Umschaltwinkel verschwenkt wurde, ist der Schalter jedoch noch nicht geschlossen, so kann auf einen Fehler rückgeschlossen werden. Dies bedeutet, dass es möglich ist, die vom Sensor 32 erfasste Stellung beziehungsweise das vom Sensor 32 bereitgestellte Signal anhand des Schalters zu plausibilisieren. Der Schalter ist dabei ein elektrischer Schalter und beispielsweise mit der Batterie 42 verbunden und von dieser mit elektrischem Strom gekoppelt. Ferner ist der Schalter mit dem ersten elektronischen Steuergerät EBS gekoppelt, sodass der Schalter, wenn er geschlossen wird, ein sein Schließen charakterisierendes weiteres Signal an das erste elektronische Steuergerät EBS übertragen kann, welches das weitere Signal empfängt. Somit kann das erste elektronische Steuergerät EBS das erste Signal und das weitere Signal empfangen und gegenseitig überprüfen beziehungsweise plausibilisieren.

Ein zweiter Sensor und Schalter können verbaut werden, welche von der zweiten Batterie 46 mit elektrischem Strom versorgt werden, und welche in einer zweiten ECU2 ausgewertet werden.

Ein in den Fig. nicht dargestellter dritter Sensor und Schalter können verbaut werden, um eine Kompatibilität zum heute in Serie befindlichen EBS zu erhalten.

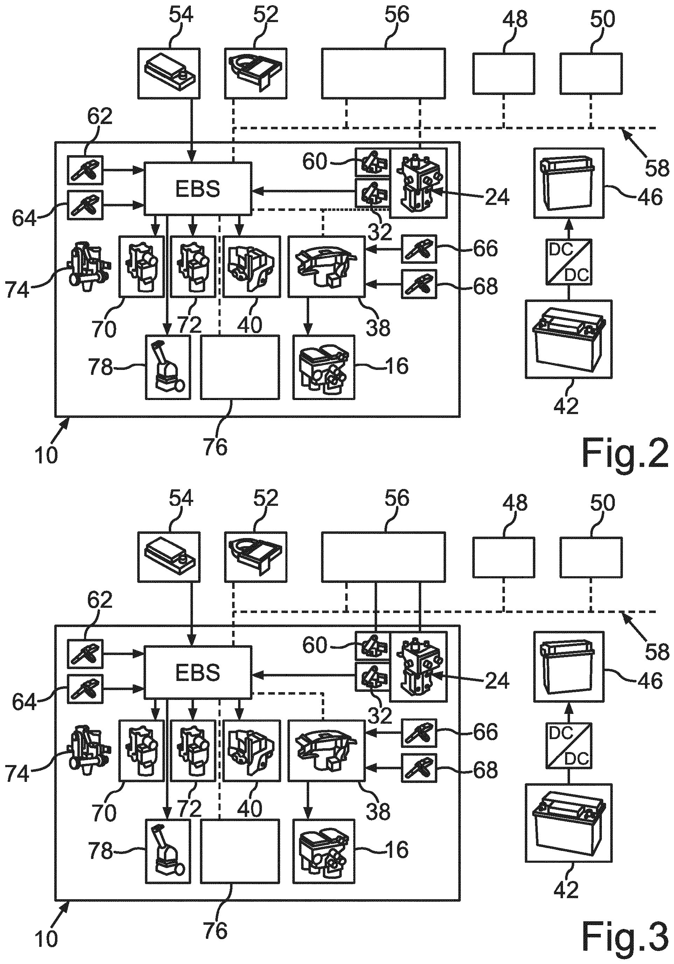

Fig. 2 zeigt das elektronische Bremssystem 10 gemäß einer ersten Ausführungsform. In Fig. 2 ist ferner ein Motor 48 erkennbar, mittels welchem das Nutzfahrzeug antreibbar ist. Beispielsweise handelt es sich bei dem Motor 48 um einen Verbrennungsmotor. Ferner kann es sich bei dem Motor 48 um einen Elektromotor oder eine Kombination aus Elektro- und Verbrennungsmotor handeln. Außerdem umfasst das Nutzfahrzeug einen Retarder 50 und einen Lenkwinkelsensor 52, mittels welchem Stellungen einer Lenkhandhabe insbesondere in Form eines Lenkrads des Nutzfahrzeugs erfassbar sind. Außerdem umfasst das Nutzfahrzeug einen Sensorcluster 54, mittels welchem beispielsweise Parameter erfassbar sind, die den fahrdynamischen Fahrzustand des Nutzfahrzeugs charakterisieren.

Zur Realisierung des automatischen Fahrens ist ein elektronisches Steuergerät 56 vorgesehen. Bei der zweiten Ausführungsform ist das Steuergerät 56 ein vom ersten elektronischen Steuergerät EBS und vom zweiten elektronischen Steuergerät ECU2 unterschiedliches, zusätzlich dazu vorgesehenes Steuergerät, sodass bei der zweiten Ausführungsform insgesamt drei voneinander unterschiedliche, elektronische Steuergeräte vorgesehen sind. Bei der ersten Ausführungsform ist das in Fig. 2 nicht erkennbare, zweite elektronische Steuergerät ECU2 ein Steuergerät des Bremswertgebers 24 und beispielsweise in den Bremswertgeber 24 integriert. Damit hat der Bremswertgeber 24 eine eigene, lokale Intelligenz in Form des elektronischen Steuergeräts ECU2.

Fig. 3 zeigt eine zweite Ausführungsform des elektronischen Bremssystems 10, bei welcher der Bremswertgeber 24 im Gegensatz zur ersten Ausführungsform kein eigenes elektronisches Steuergerät hat. Bei der zweiten Ausführungsform ist somit das Steuergerät 56 das elektronische Steuergerät ECU2, welches zum Durchführen des automatischen Fahrens sowie zum Ansteuern des Stellglieds 44 dient.

Aus Fig. 2 ist erkennbar, dass der Lenkwinkelsensor 52, der Motor 48, der Retarder 50, das elektronische Steuergerät 56 sowie der Bremswertgeber 24, insbesondere das bei der ersten Ausführungsform zusätzlich vorgesehene elektronische Steuergerät ECU2, über ein Datenbussystem 58 miteinander verbunden sind und über das Datenbussystem 58 Informationen beziehungsweise Signale austauschen können. Im Rahmen des automatischen Fahrens ist es vorgesehen, dass der Motor 48 und beispielsweise die Lenkhandhabe automatisch, das heißt ohne ein Zutun des Fahrers, mittels des elektronischen Steuergeräts 56 angesteuert und dadurch betätigt werden. Ferner wird auch das elektronische Steuergerät EBS mittels des Steuergeräts 56 angesteuert, sodass im Rahmen des automatischen Fahrens das Nutzfahrzeug automatisch beschleunigt, gebremst und gelenkt wird.

Das elektronische Steuergerät 56 stellt in Abhängigkeit von einer Vielzahl an von Sensoren bereitgestellten und empfangenen Signalen Bremsanforderungen an das elektronische Steuergerät EBS. Mit anderen Worten ist es im Rahmen des automatischen Fahrens vorgesehen, dass nicht etwa der Fahrer durch Betätigen des Bremspedals 26, sondern das elektronische Steuergerät 56 Bremsanforderungen beziehungsweise Bremswünsche stellt. Aus Redundanzgründen ist das elektronische Steuergerät 56 sowie dessen Sensoren sowohl mit der Batterie 42 als auch mit der Batterie 46 verbunden und kann von den Batterien 42 und 46 mit elektrischem Strom versorgt werden.

Die vom elektronischen Steuergerät 56 angeforderten Bremsanforderungen werden redundant an das elektronische Steuergerät EBS übertragen. Auch bei der ersten Ausführungsform ist das Stellglied 44 von der Batterie 46 mit elektrischem Strom versorgbar, denn würde das Stellglied 44 von der Batterie 42 mit elektrischer Energie versorgt werden, so würde bei einem Fehler in dieser Energieversorgung weder das elektronische Steuergerät EBS noch die Ventile 34 und 36 der pneumatischen Rückfallebene die Bremsanforderungen des elektronischen Steuergeräts 56 ausführen können. Daher werden der Elektromagnet (Stellglied 44) und seine Ansteuerung in Form des elektronischen Steuergeräts ECU2 beziehungsweise 56 von der Batterie 46 mit elektrischem Strom versorgt.

Aus Fig. 2 und 3 ist erkennbar, dass zum Erfassen der Stellungen des Bremspedals 26 ein vom Sensor 32 unterschiedlicher, zweiter Sensor 60 des Bremswertgebers 24 vorgesehen ist. Ferner ist ein zweiter Schalter vorgesehen, dessen Funktion dem ersten Schalter entspricht. Dies bedeutet, dass der erste Sensor 32, der erste Schalter, der zweite Sensor 60 und der zweite Schalter die Stellungen beziehungsweise den Weg des Bremspedals 26 erfassen. Beim automatischen Fahren ist es vorteilhaft, eindeutig unterscheiden zu können, ob und wie stark der Fahrer trotz des Durchführens des automatischen Fahrens bremsen möchte.

Hierzu ist es vorteilhaft, die Sensoren 32 und 60 und die Schalter in die Redundanz mit einzubeziehen. Der erste Sensor 32 ist beispielsweise mit der Batterie 42 verbunden und von der Batterie 42 mit elektrischem Strom versorgbar. Ferner wird das vom Sensor 32 bereitgestellte Signal an das elektronische Steuergerät EBS übertragen und von diesem empfangen und entsprechend ausgewertet. Der zweite Sensor 60 ist beispielsweise ebenfalls als elektrischer Sensor ausgebildet und dabei jedoch mit der Batterie 46 verbunden und von dieser mit elektrischem Strom versorgbar. Auch der Sensor 60 stellt ein die mittels des Sensors 60 erfassten Stellungen des Bremspedals 26 charakterisierendes Signal bereit, welches an das elektronische Steuergerät ECU2 übertragen und von diesem ausgewertet wird. Entsprechendes gilt für den ersten Schalter, welcher mit der Batterie 42 verbunden ist und sein Signal an das elektronische Steuergerät EBS überträgt. Der zweite Schalter ist mit der Batterie 46 verbunden und überträgt sein Signal an das elektronische Steuergerät ECU2.

Bei der zweiten Ausführungsform ist das elektronische Steuergerät ECU2 nicht vorgesehen, wobei das elektronische Steuergerät 56 die Funktionen des bei der ersten Ausführungsform vorgesehenen elektronischen Steuergeräts 56 und die Funktionen des elektronischen Steuergeräts ECU2 übernimmt. Dies bedeutet, dass bei der zweiten Ausführungsform das elektronische Steuergerät 56 den zweiten Sensor 60 und den zweiten Schalter zur Erfassung der Stellungen des Bremspedals 26 auswertet. Die zweite Ausführungsform hat dabei den Vorteil, dass nicht wie bei der ersten Ausführungsform drei elektronische Steuergeräte, sondern nur zwei elektronische Steuergeräte zum Einsatz kommen müssen. Ebenso entfällt eine Datenverbindung zwischen ECU2 und dem Steuergerät 56.

Optional können ein dritter Sensor und ein dritter Schalter zum Erfassen der jeweiligen Stellungen des Bremspedals 26 vorgesehen sein, wobei die vorigen Ausführungen insbesondere hinsichtlich der Funktion des ersten Sensors 32 und des ersten Schalters beziehungsweise des zweiten Sensors 60 und des zweiten Schalters ohne weiteres auf den dritten Schalter und den dritten Sensor übertragen werden können. Dabei ist es vorzugsweise vorgesehen, dass der dritte Sensor und der dritte Schalter von der Batterie 42 mit elektrischem Strom versorgbar sind und von dem elektronischen Steuergerät EBS ausgewertet werden.

Unter dem Auswerten ist zu verstehen, dass der dritte Schalter und der dritte Sensor mit dem elektronischen Steuergerät EBS verbunden sind und demzufolge ihre jeweiligen, die Stellungen des Bremspedals 26 charakterisierenden Signale an das elektronische Steuergerät EBS übertragen, welches die Signale empfängt. Hierdurch ist es möglich, das elektronische Bremssystem 10 auf besonders einfache Weise für das automatische Fahren zu ertüchtigen, ohne herkömmliche elektronische Bremssysteme verändern zu müssen. Dadurch kann eine Diversifizierung in der Hardware entfallen, was vor dem Hintergrund von üblicherweise geringen Stückzahlen von Nutzfahrzeugen gegebenenfalls zu Kostenvorteilen führen kann. Der Unterschied zwischen automatisch und nicht-automatisch fahrenden Nutzfahrzeugen läge dann beispielsweise bei der Montage in unterschiedlichen Bremspedalmodulen mit unterschiedlichen Teilenummern.

Aus Fig. 2 ist ferner erkennbar, dass das elektronische Bremssystem 10 einen Drehzahlsensor 62 zum Erfassen einer Drehzahl des linken Vorderrades umfasst. Ferner umfasst das elektronische Bremssystem 10 einen Drehzahlsensor 64 zum Erfassen einer Drehzahl des rechten Vorderrades. Die Drehzahlsensoren 62 und 64 stellen jeweilige, die jeweiligen Drehzahlen charakterisierende Signale bereit, die an das elektronische Steuergerät EBS übertragen und von diesem empfangen werden. Es sind ein Drehzahlsensor 66 zum Erfassen einer Drehzahl des linken Hinterrades und ein Drehzahlsensor 68 zum Erfassen einer Drehzahl des rechten Hinterrades vorgesehen. Die Drehzahlsensoren 66 und 68 stellen jeweilige, die jeweiligen Drehzahlen charakterisierende Signale bereit, welche an die Ventileinrichtung 35 übertragen und von der Ventileinrichtung 35 empfangen werden.

Darüber hinaus sind in Fig. 2 die als ABS-Ventile ausgebildeten Ventile 70 und 72 erkennbar, wobei das Ventil 70 dem linken Vorderrad und das Ventil 72 dem rechten Vorderrad zugeordnet ist. Darüber hinaus kann das elektronische Bremssystem 10 ein Reduzierventil 74 umfassen. Ist ein Anhänger vorgesehen, so umfasst dieser ein elektronisches Steuergerät 76, welches auch als Trailer-EBS bezeichnet wird und beispielsweise mit dem elektronischen Steuergerät EBS gekoppelt ist.

Ferner kann das elektronische Bremssystem 10 eine Parkbremse mit einem Ventil in Form eines Parkbremsventils 78 umfassen. Die Parkbremse kann beispielsweise vom Fahrer durch Betätigung eines Handhebels geöffnet und geschlossen werden. Die Parkbremse umfasst beispielsweise einen Bremsbelag und eine Feder, mittels welcher der Bremsbelag stets gegen ein korrespondierendes Bremselement insbesondere in Form einer Bremsscheibe oder einer Bremstrommel gehalten, insbesondere gedrückt, wird. Dadurch kann ein der Parkbremse zugeordnetes Rad, welches drehfest mit dem Bremselement verbunden ist, mittels des Bremsbelags gegen ein unerwünschtes Rotieren gesichert werden, sodass beispielsweise das an einer Steigung geparkte Nutzfahrzeug gegen ein unerwünschtes Wegrollen gesichert werden kann. Zum Öffnen beziehungsweise Lösen der Parkbremse kommt Druckluft zum Einsatz, welche beispielsweise aus einem weiteren, von den Druckspeichern V1 und V2 unterschiedlichen Druckspeicher stammt. Mittels der Druckluft wird der Bremsbelag gegen die Feder vom korrespondierenden Bremselement wegbewegt, sodass der Bremsbelag nicht mehr mit dem korrespondierenden Bremselement zusammenwirkt. Dies bedeutet, dass die Parkbremse mittels Druckluft gelöst wird.

Hierbei ist es nun möglich, auch die Parkbremse in das automatische Verfahren mit einzubeziehen. Der Parkbremse ist beispielsweise eine Parkbremsleitung zugeordnet, mittels welcher die Druckluft zum Bewegen des Bremsbelags geführt wird. Die Druckluft weist dabei in der Parkbremsleitung einen pneumatischen Druck auf. Wenn man den pneumatischen Druck in der Parkbremsleitung geeignet beeinflusst und beispielsweise abstufbar macht, dann kann beispielsweise ein Parkbremskreis, in welchem die Parkbremse angeordnet ist, als Rückfallebene für den Fall einer Leckage in den als Betriebsbremskreisen ausgebildeten Bremskreisen 12 und 18 genutzt werden.

Hierzu wird das Parkbremsventil 78 als elektrisches Parkbremsventil beziehungsweise elektrisch betätigbares oder elektrisch ansteuerbares Parkbremsventil ausgebildet. Dies bedeutet, dass das Parkbremsventil 78 mit einem zweiten Stellglied, insbesondere elektrischen Stellglied, ausgestattet wird, sodass das Parkbremsventil 78 automatisch, das heißt ohne Zutun des Fahrers, betätigbar ist. Vorzugsweise ist das Parkbremsventil 78 beziehungsweise das zweite Stellglied mit der Batterie 42 verbunden und von der zweiten Batterie 42 mit elektrischem Strom versorgbar. Ferner ist es vorzugsweise vorgesehen, dass das zweite Stellglied mit dem elektronischen Steuergerät EBS gekoppelt und dadurch mittels des elektronischen Steuergeräts EBS ansteuerbar ist. Dies bedeutet, dass das Parkbremsventil 78 über das zweite Stellglied mittels des elektronischen Steuergeräts EBS betätigbar ist, sodass die Parkbremse in das automatische Fahren mit einbezogen werden kann.

Um die Ventile 34 und 36 unabhängig vom Bremspedal 26 zu bewegen, ist die Koppeleinrichtung 39 teleskopartig aufgebaut. Hierzu umfasst die Koppeleinrichtung 39 einen mit dem Bremspedal 26 verbundenen Zylinder 80 sowie eine mit den Ventilen 34 und 36 verbundene Stange 82, welche teilweise in dem Zylinder 80 aufgenommen und relativ zum Zylinder 80 translatorisch bewegbar, das heißt verschiebbar ist. Die Stange 82 ist an einem Boden 84 des Zylinders 80 abstützbar, sodass der Boden 84 in Stützanlage mit der Stange 82 kommt, wenn der Fahrer das Bremspedal 26 entsprechend betätigt. Dadurch kann der Fahrer über das Bremspedal 26, den Boden 84 und die Stange 82 die Ventile 34 und 36 mechanisch betätigen.

Ferner umfasst die Koppeleinrichtung 39 ein Federelement 86, welches durch Bewegen der Ventile 34 und 36 in die Offenstellung gespannt wird. Wird eine Kraftbeaufschlagung, mittels welcher die Ventile 34 und 36 in die Offenstellung bewegt und gegen das Federelement 86 gehalten werden, beendet, so kann sich das Federelement 86 entspannen, wodurch die Ventile 34 und 36 mittels des sich entspannenden Federelements 86 aus der Offenstellung zurück in die Schließstellung bewegt werden.

Wird nun beispielsweise das Stellglied 44 angesteuert, sodass die Ventile 34 und 36 mittels des Stellglieds 44 aus der Druckabbaustellung in die Druckhalte- oder Druckaufbaustellung bewegt werden, während sich das Bremspedal 26 in der ersten Endstellung befindet und nicht bewegt, so wird die Stange 82 zumindest teilweise aus dem Zylinder 80 heraus- und vom Boden 84 wegbewegt, ohne hierdurch beziehungsweise hierbei eine Bewegung des Bremspedals 26 zu bewirken. Das Bremspedal 26 wird nämlich mittels des Federelements 30 in der ersten Endstellung gehalten. Das durch das Stellglied 44 bewirkte Bewegen der Ventile 34 und 36 erfolgt beispielsweise durch Bestromen des Stellglieds 44, das heißt indem das Stellglied 44 mit elektrischem Strom versorgt wird. Wird diese Bestromung beendet, so wird auch die zuvor genannte Kraftbeaufschlagung beendet, sodass sich das Federelement 86 entspannen und die Ventile 34 und 36 in die Schließstellung bewegen können. Dadurch wird die Stange 82 wieder in den Zylinder 80 hineingeschoben.

Insgesamt ist erkennbar, dass durch den Einsatz des Stellglieds 44 der Bremswertgeber 24 und insbesondere die Ventile 34 und 36 von außen ansteuerbar sind, ohne hierbei den Bremswertgeber 24 übermäßig ändern zu müssen. Mittels des Stellglieds 44 ist es möglich, die sich im Bremswertgeber 24 befindenden Ventile 34 und 36 bei jedem Bremswunsch im Rahmen des automatischen Verfahrens so zu betätigen, als wenn der Fahrer die Ventile 34 und 36 über das Bremspedal 26 mechanisch betätigen würde. Jedoch werden die Ventile 34 und 36 mittels des Elektromagneten und nicht etwa mittels des Bremspedals 26 mechanisch betätigt. Dadurch kann das elektronische Bremssystem 10 auf besonders einfache Weise zur Realisierung des automatischen Fahrens ertüchtigt werden.

## Patentansprüche

1. Elektronisches Bremssystem (10) für eine Bremsanlage eines Nutzfahrzeugs, mit einem Bremswertgeber (24), welcher wenigstens einen Sensor (32) zum Erfassen von Stellungen eines durch den Fahrer des Nutzfahrzeugs betätigbaren Bremspedals (26) und wenigstens ein über das Bremspedal (26) mechanisch betätigbares Ventil (34) aufweist, welches infolge der mechanischen Betätigung aus einer Druckabbaustellung in wenigstens eine Druckhalte- oder Druckaufbaustellung bewegbar ist, in welcher das Ventil (34) wenigstens eine Fluidströmung zum Betätigen wenigstens einer Betriebsbremse der Bremsanlage zulässt,
wobei dem Ventil (34) wenigstens ein vom Bremspedal (26) unterschiedliches Stellglied (44) zugeordnet ist, mittels welchem das Ventil (34) bewegbar ist,
**dadurch gekennzeichnet, dass**
das Stellglied (44) als elektrisch betätigbares Stellglied (44) ausgebildet ist, wobei das Stellglied (44) als Elektromagnet ausgebildet ist.

2. Elektronisches Bremssystem (10) nach Anspruch 1,
**dadurch gekennzeichnet, dass**
das Ventil (34) mittels des Stellglieds (44) unabhängig vom Bremspedal (26) bewegbar ist.

3. Elektronisches Bremssystem (10) nach einem der vorhergehenden Ansprüche,
**dadurch gekennzeichnet, dass**
das elektronische Bremssystem (10) umfasst:
- eine erste Batterie (42) zum Speichern von elektrischem Strom;
- ein mit der ersten Batterie (42) verbundenes und von der ersten Batterie (42) mit elektrischem Strom versorgbares erstes elektronisches Steuergerät (EBS);
- wenigstens ein elektrisch betätigbares und mittels des ersten elektronischen Steuergeräts (EBS) in Abhängigkeit von der jeweiligen erfassten Stellung des Bremspedals (26) betätigbares zweites Ventil, mittels welchem eine Fluidströmung zum Betätigen wenigstens einer Betriebsbremse der Bremsanlage einstellbar ist;
- eine von der ersten Batterie (42) unterschiedliche, zweiten Batterie (46) zum Speichern von elektrischem Strom; und
- wenigstens ein vom ersten elektronischen Steuergerät (EBS) unterschiedliches, zweites elektronisches Steuergerät (ECU2, 56), mittels welchem das Stellglied (44) ansteuerbar ist, wobei das zweite elektronische Steuergerät (ECU2, 56) mit der zweiten Batterie (46) verbunden und von der zweiten Batterie (46) mit elektrischem Strom versorgbar ist.

4. Elektronisches Bremssystem (10) nach Anspruch 3,
**dadurch gekennzeichnet, dass**
das Stellglied (44) mit der zweiten Batterie (46) verbunden und von der zweiten Batterie (46) mit elektrischem Strom versorgbar ist.

5. Elektronisches Bremssystem (10) nach Anspruch 3 oder4,
**dadurch gekennzeichnet, dass**
der Sensor (32) mit der ersten Batterie (42) verbunden und von der ersten Batterie (42) mit elektrischem Strom versorgbar ist.

6. Elektronisches Bremssystem (10) nach Anspruch 5,
**dadurch gekennzeichnet, dass**
der Bremswertgeber (24) wenigstens einen zweiten Sensor (60) zum Erfassen der Stellungen des Bremspedals (26) umfasst, wobei der zweite Sensor (60) mit der zweiten Batterie (46) verbunden und von der zweiten Batterie (46) mit elektrischem Strom versorgbar ist.

7. Elektronisches Bremssystem (10) nach Anspruch 6,
**dadurch gekennzeichnet, dass**
der erste Sensor (32) zum Bereitstellen eines die jeweiligen erfassten Stellungen charakterisierenden ersten Signals ausgebildet und mit dem ersten elektronischen Steuergerät (EBS) gekoppelt ist, welches zum Erfassen des ersten Signals ausgebildet ist, wobei der zweite Sensor (60) zum Bereitstellen eines die jeweiligen erfassten Stellungen charakterisierenden zweiten Signals ausgebildet und mit dem zweiten elektronischen Steuergerät (ECU2, 56) gekoppelt ist, welches zum Erfassen des zweiten Signals ausgebildet ist.

8. Elektronisches Bremssystem (10) nach einem der Ansprüche 3 bis 7,
**dadurch gekennzeichnet, dass**
ein Steuergerät (56) zum Durchführen eines automatischen Fahrens des Nutzfahrzeugs vorgesehen ist, wobei das Steuergerät (56) dazu ausgebildet ist, die Funktion des zweiten elektronischen Steuergeräts (ECU2) auszuführen.

9. Elektronisches Bremssystem (10) nach einem der vorhergehenden Ansprüche,
**dadurch gekennzeichnet, dass**
das elektronische Bremssystem (10) umfasst:
- wenigstens eine Parkbremse;
- wenigstens ein drittes Ventil (78), mittels welchem eine Fluidströmung zum Betätigen der Parkbremse einstellbar ist, wobei dem dritten Ventil (78) wenigstens ein zweites Stellglied, insbesondere ein elektrisch betätigbares zweites Stellglied, zugeordnet ist, mittels welchem das dritte Ventil (78) betätigbar ist.

10. Elektronisches Bremssystem (10) nach Anspruch 8 und wenigstens einem der Ansprüche 4 bis 7,
**dadurch gekennzeichnet, dass**
das dritte Ventil (78) mittels des ersten elektronischen Steuergeräts (EBS) betätigbar ist.

11. Elektronisches Bremssystem (10) nach einem der vorhergehenden Ansprüche,
**dadurch gekennzeichnet, dass**
das Fluid Luft oder eine Flüssigkeit, insbesondere Hydraulikflüssigkeit oder Bremsflüssigkeit, ist.

12. Nutzfahrzeug mit einem elektronischen Bremssystem (10) nach einem der vorhergehenden Ansprüche.

## Claims

1. Electronic brake system (10) for a braking system of a utility vehicle, with a braking value encoder (24) that comprises at least one sensor (32) for detecting positions of a brake pedal (26) that is operated by the driver of the utility vehicle and at least one valve (34) that is mechanically actuated by means of the brake pedal (26), which as a result of the mechanical actuation can be moved from a pressure reduction position to at least one pressure maintenance position or pressure build-up position, in which the valve (34) passes at least one fluid flow for actuating at least one service brake of the braking system,
wherein at least one final control element (44) that is different from the brake pedal (26) and by means of which the valve (34) can be moved is associated with the valve (34),
**characterized in that**
the final control element (44) is implemented as an electrically operated final control element (44), wherein the final control element (44) is implemented as an electromagnet.

2. Electronic brake system (10) according to Claim 1, **characterized in that**
the valve (34) can be moved by means of the final control element (44) independently of the brake pedal (26) .

3. Electronic brake system (10) according to either of the preceding claims,
**characterized in that**
the electronic brake system (10) comprises:
- a first battery (42) for storing electrical current;
- a first electronic control unit (EBS) that is connected to the first battery (42) and that can be supplied with electrical current by the first battery (42) ;
- at least one electrically operated second valve that is actuated by means of the first electronic control unit (EBS) depending on the respective detected position of the brake pedal (26) and by means of which a fluid flow for actuating at least one service brake of the braking system can be adjusted;
- a second battery (46) that is different from the first battery (42) for storing electrical current; and
- at least one second electronic control unit (ECU2, 56) that is different from the first electronic control unit (EBS), by means of which the final control element (44) can be actuated, wherein the second electronic control unit (ECU2, 56) is connected to the second battery (46) and can be supplied with electrical current from the second battery (46).

4. Electronic brake system (10) according to Claim 3,
**characterized in that**
the final control element (44) is connected to the second battery (46) and can be supplied with electrical current from the second battery (46).

5. Electronic brake system (10) according to Claim 3 or 4,
**characterized in that**
the sensor (32) is connected to the first battery (42) and can be supplied with electrical current from the first battery (42).

6. Electronic brake system (10) according to Claim 5,
**characterized in that**
the braking value encoder (24) comprises at least one second sensor (60) for detecting the positions of the brake pedal (26), wherein the second sensor (60) is connected to the second battery (46) and can be supplied with electrical current from the second battery (46).

7. Electronic brake system (10) according to Claim 6,
**characterized in that**
the first sensor (32) is implemented to provide a first signal characterizing the respective detected positions and is coupled to the first electronic control unit (EBS), which is implemented for detecting the first signal, wherein the second sensor (60) is implemented to provide a second signal characterizing the respective detected positions and is coupled to the second electronic control unit (ECU2, 56), which is implemented for detecting the second signal.

8. Electronic brake system (10) according to any one of Claims 3 to 7,
**characterized in that**
a control unit (56) for carrying out automatic driving of the utility vehicle is provided, wherein the control unit (56) is implemented to perform the function of the second electronic control unit (ECU2).

9. Electronic brake system (10) according to any one of the preceding claims,
**characterized in that**
the electronic brake system (10) comprises:
- at least one parking brake;
- at least one third valve (78), by means of which a fluid flow for actuating the parking brake can be adjusted, wherein at least one second final control element, in particular an electrically operated second final control element, by means of which the third valve (78) can be actuated, is associated with the third valve (78).

10. Electronic brake system (10) according to Claim 8 and at least one of Claims 4 to 7,
**characterized in that**
the third valve (78) can be actuated by means of the first electronic control unit (EBS).

11. Electronic brake system (10) according to any one of the preceding claims,
**characterized in that**
the fluid is air or a liquid, in particular hydraulic fluid or brake fluid.

12. Utility vehicle with an electronic brake system (10) according to any one of the preceding claims.

## Revendications

1. Système de freinage électronique (10) pour un équipement de freinage d'un véhicule utilitaire, comprenant un transmetteur de valeur de freinage (24), lequel possède au moins un capteur (32) destiné à détecter des positions d'une pédale de frein (26) pouvant être actionnée par le conducteur du véhicule utilitaire et au moins une vanne (34) qui peut être actionnée mécaniquement par le biais de la pédale de frein (26) et qui, en conséquence de l'actionnement mécanique, peut être déplacée d'une position de réduction de pression en au moins une position de maintien de pression ou de mise en pression, dans laquelle la vanne (34) autorise au moins un écoulement de fluide servant à actionner au moins un frein de service de l'équipement de freinage,
au moins un actionneur (44), au moyen duquel la vanne (34) peut être déplacée, différent de la pédale de frein (26) étant associé à la vanne (34),
**caractérisé en ce que**
l'actionneur (44) est réalisé sous la forme d'un actionneur (44) pouvant être actionné électriquement,
l'actionneur (44) étant réalisé sous la forme d'un électroaimant.

2. Système de freinage électronique (10) selon la revendication 1, **caractérisé en ce que** la vanne (34) peut être déplacée au moyen de l'actionneur (44) indépendamment de la pédale de frein (26).

3. Système de freinage électronique (10) selon l'une des revendications précédentes, **caractérisé en ce que** le système de freinage électronique (10) comprend :
- une première batterie (42) destinée à accumuler du courant électrique ;
- un premier contrôleur électronique (EBS) relié à la première batterie (42) et pouvant être alimenté en courant électrique par la première batterie (42) ;
- au moins une deuxième vanne, pouvant être actionnée électriquement et pouvant être actionnée au moyen du premier contrôleur électronique (EBS) en fonction de la position respectivement détectée de la pédale de frein (26), au moyen de laquelle peut être réglé un écoulement de fluide servant à actionner au moins un frein de service de l'équipement de freinage ;
- une deuxième batterie (46), différente de la première batterie (42), destinée à accumuler du courant électrique ; et
- au moins un deuxième contrôleur électronique (ECU2, 56), différent du premier contrôleur électronique (EBS), au moyen duquel peut être commandé l'actionneur (44), le deuxième contrôleur électronique (ECU2, 56) étant relié à la deuxième batterie (46) et pouvant être alimenté en courant électrique par la deuxième batterie (46).

4. Système de freinage électronique (10) selon la revendication 3, **caractérisé en ce que** l'actionneur (44) est relié à la deuxième batterie (46) et peut être alimenté en courant électrique par la deuxième batterie (46) .

5. Système de freinage électronique (10) selon la revendication 3 ou 4, **caractérisé en ce que** le capteur (32) est relié à la première batterie (42) et peut être alimenté en courant électrique par la première batterie (42) .

6. Système de freinage électronique (10) selon la revendication 5, **caractérisé en ce que** le transmetteur de valeur de freinage (24) comporte au moins un deuxième capteur (60) destiné à détecter les positions de la pédale de frein (26), le deuxième capteur (60) étant relié à la deuxième batterie (46) et pouvant être alimenté en courant électrique par la deuxième batterie (46) .

7. Système de freinage électronique (10) selon la revendication 6, **caractérisé en ce que** le premier capteur (32) est configuré pour délivrer un premier signal, qui caractérise les positions respectivement détectées et qui est connecté au premier contrôleur électronique (EBS), lequel est configuré pour acquérir le premier signal, le deuxième capteur (60) étant configuré pour délivrer un deuxième signal, qui caractérise les positions respectivement détectées et qui est connecté au deuxième contrôleur électronique (ECU2, 56), lequel est configuré pour acquérir le deuxième signal.

8. Système de freinage électronique (10) selon l'une des revendications 3 à 7, **caractérisé en ce qu'**il existe un contrôleur (56) destiné à effectuer une conduite automatique du véhicule utilitaire, le contrôleur (56) étant configuré pour accomplir la fonction du deuxième contrôleur électronique (ECU2).

9. Système de freinage électronique (10) selon l'une des revendications précédentes, **caractérisé en ce que** le système de freinage électronique (10) comprend :
- au moins un frein de stationnement ;
- au moins une troisième vanne (78) au moyen de laquelle peut être réglé un écoulement de fluide servant à actionner le frein de stationnement, au moins un deuxième actionneur, notamment un deuxième actionneur pouvant être actionné électriquement, au moyen duquel la troisième vanne (78) peut être actionnée, étant associé à la troisième vanne (78).

10. Système de freinage électronique (10) selon la revendication 8 et au moins l'une des revendications 4 à 7, **caractérisé en ce que** la troisième vanne (78) peut être actionnée au moyen du premier contrôleur électronique (EBS).

11. Système de freinage électronique (10) selon l'une des revendications précédentes, **caractérisé en ce que** le fluide est de l'air ou un liquide, notamment un liquide hydraulique ou un liquide de frein.

12. Véhicule utilitaire équipé d'un système de freinage électronique (10) selon l'une des revendications précédentes.
